# EUROPÄISCHE PATENTANMELDUNG

(11) **EP 1 126 298 A1**
(43) Veröffentlichungstag der Anmeldung: **22.08.2001**
(21) Anmeldenummer: 00103017.0
(22) Anmeldetag: 15.02.2000
(51) Int. Cl.: G02B 23/12

(54) **Nachtsichtgerät**

(71) Anmelder: Leica Geosystems AG, 9435 Heerbrugg (CH)
(72) Erfinder: Zadravec, Dusan, 9445 Rebstein (CH)
(74) Vertreter: Kaminski, Susanne, Dr.

(57) **Zusammenfassung**

Ein Nachtsichtgerät weist ein das von einem zu beobachtenden Objekt ausgehende Restlicht auf ein Eintrittsfenster (2) eines Restlichtverstärkers (3) fokussierendes, entlang einer optischen Achse (A) angeordnetes Objektiv (1) auf. Eine optische Baugruppe (6-8) projiziert das am Austrittsfenster (4) des Restlichtverstärkers (3) verfügbare, in einem vorgegebenen Wellenlängenbereich dargestellte Bild des Objekts auf wenigstens einen Rezeptor, wie ein menschliches Auge (9). Der Strahlengang zwischen dem Austrittsfenster (4) des Restlichtverstärkers (3) und dem Rezeptor (9) ist durch reflektive optische Elemente (6, 8) bestimmt, von denen eines (8) entlang einer zum Rezeptor (9) führenden, zur Achse (A) des Objektivs (1) im wesentlichen parallelen Achse (B) gelegen und für den vorgegebenen Wellenlängenbereich des Restlichtverstärkers (3) im wesentlichen reflektiv, gegebenenfalls für andere Wellenlängenbereiche hingegen im wesentlichen durchlässig ist.

## Beschreibung

Die Erfindung bezieht sich auf ein Nachtsichtgerät nach dem Oberbegriff des Anspruches 1, und insbesondere auf ein monokulares (einäugiges) Nachtsichtgerät.

Monokulare Nachtsichtgeräte sind im wesentlichen nach folgenden Prinzipien ausgebildet. Ein, vorzugsweise lichtstarkes, Objektiv fokussiert die von einem zu beobachtenden Objekt ausgehenden Strahlen auf ein Eintrittsfenster eines Restlichtverstärkers. Das Bild des Objektes wird dort elektronisch verstärkt und erscheint, infolge des phosphoreszierenden Belages am Ausgang des Restlichtverstärkers, als helles grünes Bild auf dessen Austrittsfenster. Das wesentliche Merkmal des Restlichtverstärkers in diesem Zusammenhang ist, dass er mit einem "Inverter" (Bildumkehrsystem) versehen ist, welches das verstärkte grüne Bild des Objektes umkehrt. Dieses grüne Bild wird über ein Okular ins Auge des Anwenders projiziert. Die Ausstattung des Restlichtverstärkers mit einem Inverter ist kostenintensiv, die Länge und das Gewicht des Restlichtverstärkers nehmen deutlich zu.

Andererseits kann - statt durch einen Inverter - das elektronisch verstärkte grüne Bild des Objektes mittels eines separaten optischen Bildumkehrsystems invertiert werden, welches das Bild danach durch ein Okular ins Auge projiziert. Das Ergebnis ist aber praktisch gleich: denn bei herkömmlichen, aus Linsen gebildeten Umkehrsystemen ergibt sich dann ein langes, schweres und relativ teures (monokulares) Nachtsichtgerät.

Der Erfindung liegt demgegenüber die Aufgabe zugrunde, ein, insbesondere monokulares, Nachtsichtgerät bereitzustellen, das weder einen Restlichtverstärker mit dem herkömmlichen Inverter noch eine separate Optik für die Bildumkehrung braucht. Durch diese Gegebenheiten sollte man Länge, Gewicht und Herstellkosten des Gerätes deutlich reduzieren können.

Dies gelingt erfindungsgemäss durch die Verwirklichung der kennzeichnenden Merkmale des Anspruches 1 bzw. der des Anspruchs 10. Wenn dabei davon die Rede ist, dass die durch das Objektiv des Gerätes verlaufende optische Achse "im wesentlichen" parallel zu der zum Rezeptor führenden Achse sein soll, so können sich geringe Abweichungen von der Parallelität gegebenenfalls durch einen Parallaxenausgleich ergeben. Wenn gesagt wird, der Strahlengang zwischen dem Austrittsfenster des Restlichtverstärkers und dem Rezeptor sei durch reflektive optische Elemente bestimmt, so schliesst dies jedenfalls nicht aus, dass, etwa zur Veränderung des Vergrösserungsfaktors, auch Linsen, also brechende Elemente, mitverwendet werden.

Vorteilhafte bzw. alternative Ausführungsformen werden durch die Merkmale der abhängigen Ansprüche beschrieben.

Bei der Erfindung werden grundsätzlich die refraktiven optischen Teile zwischen dem Restlichtverstärker und dem menschlichen Auge durch reflektive ersetzt, was die Herstellkosten für ein erfindungsgemässes Gerät reduziert. Auch in Bezug auf den Tragekomfort stellt dies eine nicht unbeträchtliche Gewichts- und Baulängenreduktion dar. Zusätzlich weist die erfindungsgemässe Lösung mit reflektiven optischen Elementen noch die Eigenschaft auf, das Objekt direkt beobachten zu können (z.B. wie durch eine Sonnenbrille) und gleichzeitig auch sein verstärktes, im allgemeinen grünes, Bild - überlagert auf das "direkte" Bild - zu sehen.

Die Erfindung wird im folgenden anhand der Zeichnung rein beispielhaft beschrieben. Es zeigen:
- Fig. 1: eine schematische Darstellung der Optik eines erfindungsgemässen, insbesondere monokularen, Nachtsichtgeräts;
- Fig. 2 und 3: je eine Variante hierzu; und die
- Fig.4: eine Variante zu Fig.3.

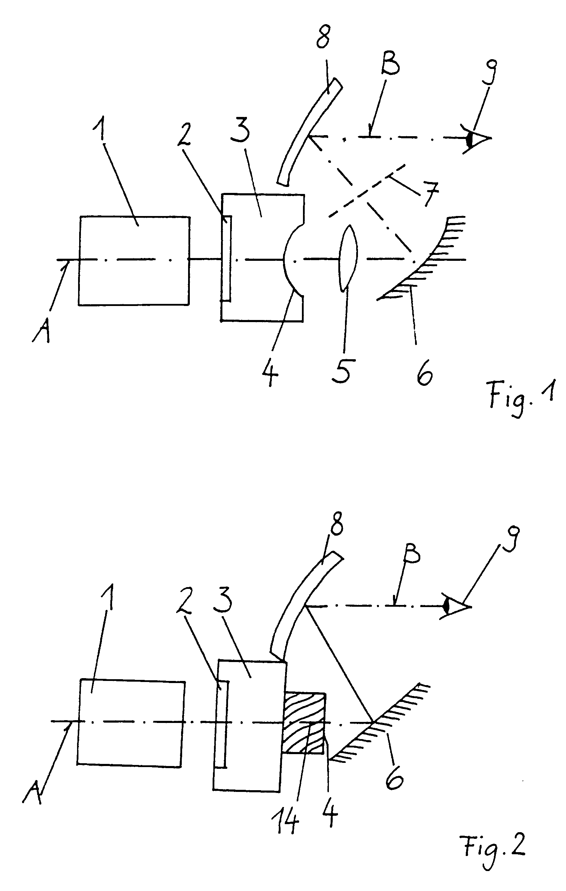

Die wesentlichen Bauelemente eines erfindungsgemässen monokularen Nachtsichtgerätes sind aus Fig. 1 zu entnehmen. Ein vorzugsweise für den Wellenlängenbereich von ca. 450 bis 950 nm ausgelegtes lichtstarkes Objektiv 1 fokussiert die von einem zu beobachtenden Objekt ausgehenden Strahlen auf ein Eintrittsfenster 2 eines Restlichtverstärkers 3. Dieser Restlichtverstärker 3 entspricht in seiner Ausbildung insbesondere einem der am Markte unter der Bezeichnung Gen II, Gen III oder Gen IV vertriebenen Generation. In diesem Restlichtverstärker 3 wird das Bild des Objekts elektronisch verstärkt und erscheint am phosphoreszierenden Austrittsfenster 4 des Restlichtverstärkers 3 als helles grünes Bild. Dieses grüne Bild wird über ein Linsensystem 5 auf ein optisches Element 6 kollimiert. Dieses optische Element 6 fokussiert das auftreffende Strahlenbündel in einer Zwischenbildebene 7. Dazu ist das optische Element 6 beispielsweise in Form eines Spiegels ausgebildet, der sphärisch oder asphärisch sein kann.

Das Strahlenbündel trifft auf die Oberfläche eines, gleichzeitig als Durchsichtbrillenglas wirkenden, reflektiven optischen Elements 8, das in der gezeigten Ausführung zum Auge 9 hin konkav ausgebildet ist. Die dem Auge 9 zugewandte Fläche kann aber auch asphärisch oder torisch ausgebildet sein. Eine der beiden Oberflächen des reflektiven Elements 8, im vorliegenden Falle z.B. die dem Auge 9 zugewandte Oberfläche, ist mit einer Beschichtung versehen, die in dem Wellenlängenbereich des über den Restlichtverstärker 3 erhaltenen Lichtes, d.h. Phosphor-Grün, ein Reflexionsmaximum zeigt. Auf diese Weise wird der Unterschied der Wellenlängenbereiche des Lichtes von aussen und des vom Restlichtverstärker abgegebenen Wellenlängenbereiches für die Erfindung vorteilhaft ausgenützt.

Das Zwischenbild der Zwischenbildebene 7 wird also von dem reflektiven Element 8 reflektiert und kollimiert und in das Auge 9 projiziert. Der Abbildungsmassstab für das so erzeugte Bild des Objektes hat vorteilhaft einen Vergrösserungsfaktor von 1.

Wenn das optische reflektive Element 8 gleichzeitig als Durchsichtbrillenglas wirkt, sieht das Auge das Objekt gleichzeitig auch direkt durch das reflektive Element 8 hindurch - vergleichbar dem Durchblick durch eine Sonnenbrille. Da das durch das Objektiv einfallende Strahlenbündel und das durch das reflektive Element 8 hindurchgehende Strahlenbündel an im wesentlichen zueinander parallelen Strahlengängen liegen, würde sich an sich eine geringe Parallaxe ergeben, doch können die einzelnen optischen Bauteile 1 bis 8, wie etwa von zweiäugigen Spiegelreflexkameras bekannt, derart angeordnet werden, dass das über den Restlichtverstärker 3 erhaltene verstärkte Bild des Objekts und das direkt verfügbare, im allgemeinen äusserst schwache Bild des Objekts im Auge genau überlagert und somit auf dieselben Bereiche der Netzhaut - und insbesondere bei einem Vergrösserungsfaktor von 1 auch im gleichen Abbildungsmassstab - projiziert werden.

Die damit verbundenen Vorteile liegen auf der Hand. Die Wahrnehmung der Objektumgebung, d.h. der realen Welt, wird durch die doppelte Sicht verbessert, die Bewegungsfreiheit und das Sicherheitsgefühl des Anwenders wird gesteigert. Sollte der Restlichtverstärker 3 ausfallen, so bleibt, besonders bei Dämmerung, doch noch ein restliches Sichtvermögen durch das reflektive Element 8 hindurch erhalten, und plötzliche totale Bildausfälle werden vermieden. Dies gilt besonders bei veränderlichen Lichtverhältnissen, bei denen der Restlichtverstärker auf Grund plötzlich erhöhter Lichtpegel oder starker ins Blickfeld der Nachtsehbrille gelangender Lichtquellen "erblinden" kann, so dass auch das verstärkte Bild nicht brauchbar wird. In diesem Fall ist die direkte Beobachtung durch das gleichzeitig als Brillenglas wirksame reflektive Element 8 gegeben, wobei das menschliche Auge sich automatisch den geänderten Lichtverhältnissen durch Änderung der Pupillengrösse anpasst.

Zwischen dem optischen Element 6 und dem reflektiven optischen Element 8 können - zur Verbesserung der Bildqualität - Linsen angeordnet werden. Ausserdem könnte in der Bildebene 7 eine Strichplatte oder ein graphisches oder alphanumerisches Display angeordnet werden.

Ein besonderer Vorteil der vorliegenden Erfindung ist die Ablösung der refraktiven auf die reflektive Optik zwischen dem Restlichtverstärker 3 und dem Auge 9 und die dadurch gegebene Faltmöglichkeit für den Strahlengang. Damit werden sowohl das Gewicht als auch die Länge des Gerätes reduziert.

Wenn oben von einem "monokularen" Nachtsichtgerät die Rede war, so ist darauf hinzuweisen, dass die in Fig. 1 dargestellte Optik natürlich als monokulares Gerät wirksam ist. Anderseits ist die Erfindung keineswegs auf eine einäugige Betrachtung beschränkt, denn es könnte der eben beschriebene Strahlengang ja für jedes der beiden Augen bereitgestellt werden, wodurch sich eine zweiäugige Betrachtung des jeweiligen Objekts ergäbe.

In der in Fig. 2 dargestellten Variante zur Ausführungsform nach Fig. 1 ist der, wiederum in seiner Ausbildung zweckmässig einem der Generation Gen II, Gen III oder Gen IV entsprechende, Restlichtverstärker 3 mit einem faseroptischen Inverter 14 - an Stelle der herkömmlichen Bildumkehrsysteme mit Linsen oder Spiegeln - versehen. Dieser Inverter ist ein Lichtfaserbündel, das derart verdreht ist, dass seine Eingangsflächen gegenüber seinen Austrittsflächen um etwa 180° gekehrt sind. Die Aufgabe des faseroptischen Inverters 14 ist es somit, das elektronisch verstärkte grüne Bild des Restlichtverstärkers 3 auf dem, nun hinter dem Inverter 14 gelegenen Austrittsfenster 4' umzukehren. Das Austrittsfenster 4' kann dabei entweder senkrecht oder unter einem Winkel gegenüber der optischen Achse des Restlichtverstärkers 3 liegen.

Das so umgekehrte grüne Bild des Restlichtverstärkers 3 wird sodann wiederum auf ein optisches Element 6 projiziert. Das optische Element 6 reflektiert, wie im vorherigen Ausführungsbeispiel, das auftreffende Strahlenbündel auf das bereits erwähnte reflektive Element 8. Dazu ist das optische Element 6 beispielsweise in Form eines Spiegels ausgebildet, der - ebenso wie die Spiegelfläche des reflektiven Elements 8 - plan, sphärisch oder asphärisch ausgebildet sein kann.

Auch in diesem Ausführungsbeispiel trifft das vom reflektiven Element 6 kommende Strahlenbündel auf die Oberfläche des gleichzeitig als Durchsichtsbrillenglas wirkende reflektive optische Element 8. Auch hier ist das gleichzeitig als Durchsichtbrillenglas wirkende, reflektive optische Element 8 an einer der beiden Oberflächen, z.B. an der dem Auge 9 zugewandten Oberfläche, mit einer Beschichtung versehen, die in dem Wellenlängenbereich des über den Restlichtverstärker 3 erhaltenen Lichtes, d.h. Phosphor-Grün, ein Reflexionsmaximum zeigt. Das Strahlenbündel wird also vom reflektiven Element 8 reflektiert und kollimiert und in das Auge 9 projiziert. Der Abbildungsmassstab für das so erzeugte Bild des Objektes hat wiederum vorteilhaft einen Vergrösserungsfaktor von 1.

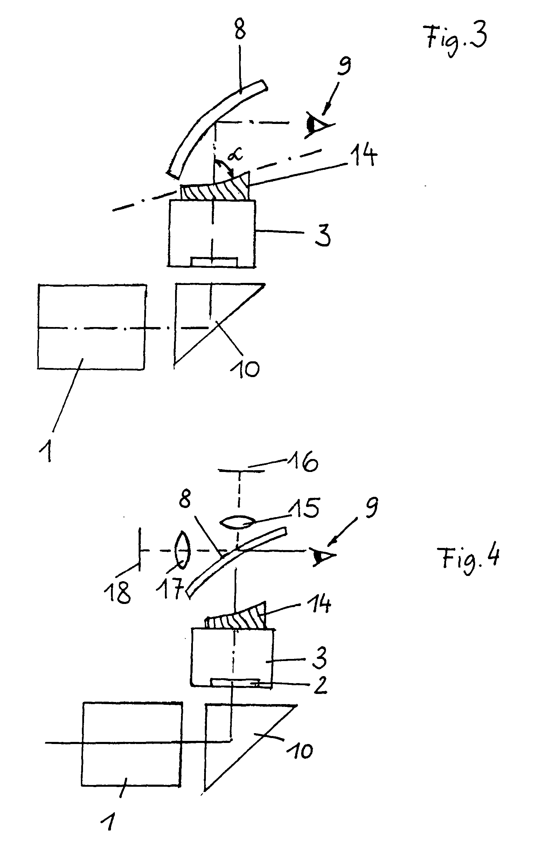

Fig. 3 ist eine Variante zur Ausführungsform nach Fig. 2. Auch hier wird wiederum von einem faseroptischen Inverter 14 Gebrauch gemacht, der vorzugsweise ein unter einem Winkel α zur strich-punktiert gezeigten optischen Achse des Restlichtverstärkers 3 liegendem Austrittsfenster, das flach oder mit einer, z.B. sphärischen oder aspärischen, Krümmung ausgeführt werden kann. In jedem Falle kann dadurch die Baulänge des Gerätes noch weiter drastisch reduziert werden.

Fig.4 zeigt eine Ausbildungsvariante entsprechend Fig.3. Das über den Restlichtverstärker 3 und den Inverter 14 erhaltene grüne Bild wird hier über ein Objektiv 15 auf ein CCD-Array 16 mit hoher Empfindlichkeit fokussiert. Dazu ist die dem Auge 9 zugewandte Oberfläche des reflektiven Elements 8 derart beschichtet, dass ein bestimmter Bruchteil des über den Restlichtverstärker 3 erhaltenen Lichtes durchtreten kann, während der andere Teil des Lichtes am reflektiven Elements 8 ins Auge 9 fokussiert wird. Auf diese Weise kann das Nachtbild auch auf einem dem CCD-Array 16 zugeordneten Monitor beobachtet werden. Für das empfindliche CCD-Array wird eine Transmission für den fraglichen Wellenlängenbereich von 10-20% ausreichend sein; die entsprechende Intensitätsverminderung für den ins Auge reflektierten Anteil fällt ncht sehr ins Gewicht, da die Licht-Empfindlichkeit des Auges mit dem Logarithmus des Reizes geht. Dazu kommt, dass die maximale Empfindlichkeit des Auges (wenn auch für das hell adaptierte Auge) im grünen Farbbereich liegt.

Entsprechend dem oben in Fig.1 in der Bildebene 7 möglicherweise vorzusehenden numerischen oder graphischen Display, kann - entsprechend dem Einsatz des Nachtsichtgerätes - auch hier ein Display 18 vorgesehen sein, der über ein Objektiv oder Linsensystem 17 ins Auge projiziert wird. Display 18 und Linsensystem 17 sind dabei entlang der optischen Achse B gelegen, an der der Rezeptor, das Auge 9, und auch das reflektive Element 8 angeordnet sind.

## Patentansprüche

1. Nachtsichtgerät mit einem das von einem zu beobachtenden Objekt ausgehende Restlicht auf ein Eintrittsfenster (2) eines Restlichtverstärkers (3) fokussierenden, entlang einer optischen Achse (A) angeordneten Objektiv (1), mit einer optischen Baugruppe (6-8), die das am Austrittsfenster (4) des Restlichtverstärkers (3) verfügbare, in einem vorgegebenen Wellenlängenbereich dargestellte Bild des Objekts auf wenigstens einen Rezeptor, wie ein menschliches Auge (9), projiziert, **dadurch gekennzeichnet,** dass der Strahlengang zwischen dem Austrittsfenster (4) des Restlichtverstärkers (3) und dem Rezeptor (9) durch wenigstens ein reflektives optisches Element (6, 8) bestimmt ist, wobei das wenigstens erste reflektive Element (8) entlang einer zum Rezeptor (9) führenden, zur Achse (A) des Objektivs (1) im wesentlichen parallelen Achse (B) gelegen und für den vorgegebenen Wellenlängenbereich des Restlichtverstärkers (3) im wesentlichen reflektiv, gegebenenfalls für andere Wellenlängenbereiche hingegen im wesentlichen durchlässig ist.

2. Nachtsichtgerät nach Anspruch 1, dadurch gekennzeichnet, dass das über den Restlichtverstärker (3) dem Rezeptor (9) zugeführte Bild einen Vergrösserungsfaktor von 1 hat.

3. Nachtsichtgerät nach Anspruch 1 oder 2, dadurch gekennzeichnet, dass das Objektiv (1) für einen Wellenlängenbereich zwischen 400 und 1000 nm, vorzugsweise 450 und 950 nm, ausgelegt ist.

4. Nachtsichtgerät nach einem der vorhergehenden Ansprüche, dadurch gekennzeichnet, dass das das Bild dem Rezeptor (9) zuführende reflektive Element (8) zum Rezeptor hin sphärisch, asphärisch oder torisch, insbesondere konkav, ist.

5. Nachtsichtgerät nach einem der vorhergehenden Ansprüche, dadurch gekennzeichnet, dass das das Bild dem Rezeptor (9) zuführende reflektive Element (8) an der dem Rezeptor abgewandten Seite sphärisch, asphärisch oder torisch, insbesondere konvex, ist.

6. Nachtsichtgerät nach einem der vorhergehenden Ansprüche, dadurch gekennzeichnet, dass ein vor dem das Bild dem Rezeptor (9) zuführenden, ersten reflektiven Element (8) gelegenes, zweites reflektives Element (6), insbesondere zur Erzeugung eines Zwischenbildes (7), sphärisch, asphärisch oder torisch, insbesondere konkav, ist.

7. Nachtsichtgerät nach einem der vorhergehenden Ansprüche, dadurch gekennzeichnet, dass, vorzugsweise am Austrittsfenster (4) des Restlichtverstärkers (3), ein faseroptischer Inverter (14) für die Bildumkehr vorgesehen ist.

8. Nachtsichtgerät nach Anspruch 7, dadurch gekennzeichnet, dass das, z.B. ebene, Austrittsfenster des faseroptischen Inverters (14)zu der ihn durchquerenden optischen Achse, insbesondere der optischen Achse des Restlichtverstärkers (3), unter einem Winkel (α) geneigt ist.

9. Nachtsichtgerät nach Anspruch 8, dadurch gekennzeichnet, dass das Austrittsfenster des faseroptischen Inverters (14) eine, z.B. sphärische oder asphärische, Krümmung besitzt.

10. Nachtsichtgerät mit einem das von einem zu beobachtenden Objekt ausgehende Restlicht auf ein Eintrittsfenster (2) eines Restlichtverstärkers (3) fokussierenden, entlang einer optischen Achse (A) angeordneten Objektiv (1), mit einer optischen Baugruppe (6-8), die das am Austrittsfenster (4) des Restlichtverstärkers (3) verfügbare, in einem vorgegebenen Wellenlängenbereich dargestellte Bild des Objekts auf wenigstens einen Rezeptor, wie ein menschliches Auge (9), projiziert, **dadurch gekennzeichnet,** dass der Strahlengang zwischen dem Austrittsfenster (4) des Restlichtverstärkers (3) und dem Rezeptor (9) durch wenigstens ein reflektives optisches Element (6, 8) bestimmt ist, wobei das wenigstens erste reflektive Element (8) entlang einer zum Rezeptor (9) führenden, zur Achse (A) des Objektivs (1) im wesentlichen parallelen Achse (B) gelegen und eine Transmission von ca. 10 - 20% für den vorgegebenen Wellenlängenbereich des Restlichtverstärkers (3) aufweist.

11. Nachtsichtgerät nach Anspruch 10, dadurch gekennzeichnet, dass im Strahlengang des über den Restlichtverstärker (3) verfügbaren, durch das erste reflektive Element (8) durchgelassenen Restlichtanteils eine Anordnung zur Verarbeitung der über diesen Restlichtanteil gegebenen optischen Signale, wie ein CCD-Array, vorgesehen ist zur Darstellung des Bildes des zu beobachtenden Objekts auf einem Monitor.

12. Nachtsichtgerät nach einem der vorhergehenden Ansprüche, dadurch gekennzeichnet, dass entlang der parallelen Achse (B) ein Bildgeber, wie ein graphischer oder alpha-numerischer Display (18), und ein diesem zugeordnetes, wenigstens eine Linse aufweisendes Linsensystem (17) angeordnet ist, wobei das erste reflektive Element (8) insbesondere zwischen dem Rezeptor und Bildgeber und Linsensystem (17) angeordnet ist.
